# DEMANDE DE BREVET EUROPEEN

(11) **EP 1 208 735 A1**
(43) Date de publication de la demande: **29.05.2002**
(21) Numéro de dépôt: 00125192.5
(22) Date de dépôt: 20.11.2000
(51) Int. Cl.: A01D 41/14

(54) **Protecteur de fruits pour système de coupe**

(71) Demandeur: Avidor SA, 1029 Villars-Ste-Croix (CH)
(72) Inventeur: Ducret, Jean-Luc, 1801 Le Mont-Pèlerin (FR)

(57) **Abrégé**

Cet accessoire, adaptable sur toute machine munie de barres de coupe, permet d'écarter les fruits de celles-ci.

Il est composé d'un support de fixation (1) qui s'adapte aux portes lames (3) des différentes machines équipées de ces barres de coupe (4), et d'un écarteur (2) dont la forme est étudiée spécialement afin de ne pas blesser les fruits.

Cet écarteur (2) est réglable par rapport aux barres de coupe (4) afin de s'adapter aux différentes conditions de travail telles que: circonférence des fruits, volume de la végétation, angle d'attaque de la coupe, etc.

## Description

Il existe sur le marché, des machines qui utilisent des barres de coupe pour cisailler des végétaux. Il est impératif, lors de cette opération, de ne pas couper ni blesser les fruits de ces plantes.

En pouvant adapter sur toutes machines équipées de barres de coupe un protecteur de fruits, on assure l'intégrité de ceux-ci par rapport aux éléments tranchants.

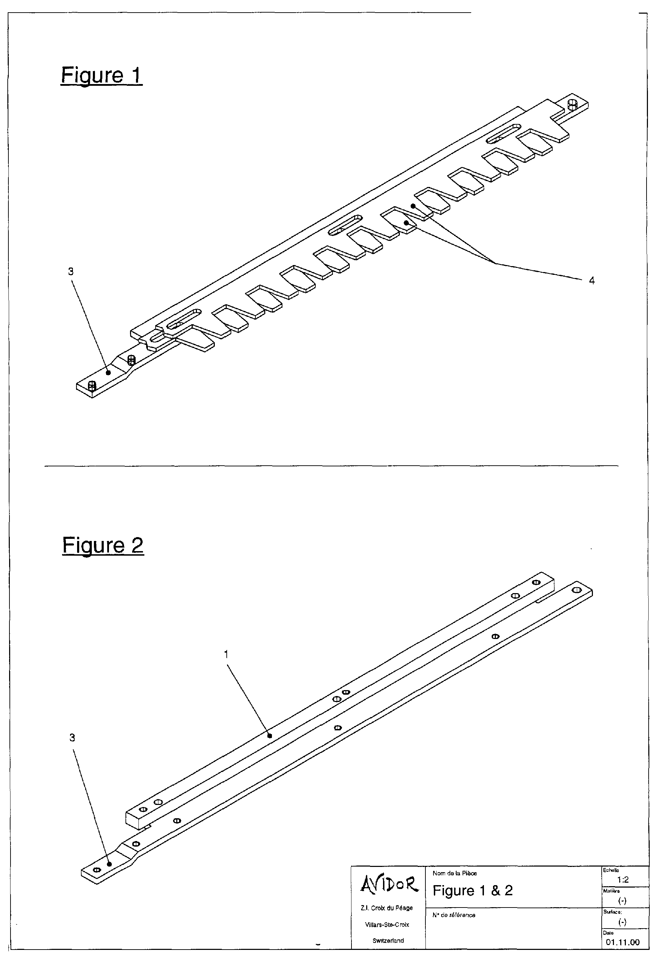

On prendra comme exemple dans toute cette présentation, l'utilisation d'un protecteur de grappes de raisin, monté sur une tête d'effeuilleuse munie de ces dites barres de coupe (Fig. 1).

C'est un accessoire adaptable sur des machines munies de barres de coupe. Il permet d'éviter que les fruits entrent en contact avec les parties tranchantes de celles ci.

Cet accessoire, a pour but d'éviter toute blessure ou cisaillement par les barres de coupe sur les grappes.

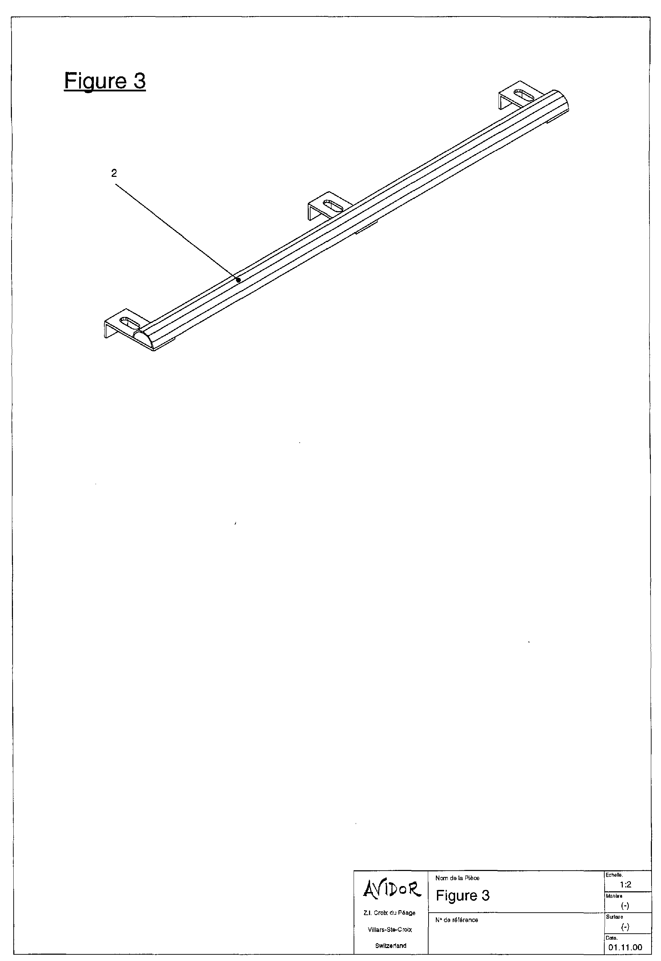

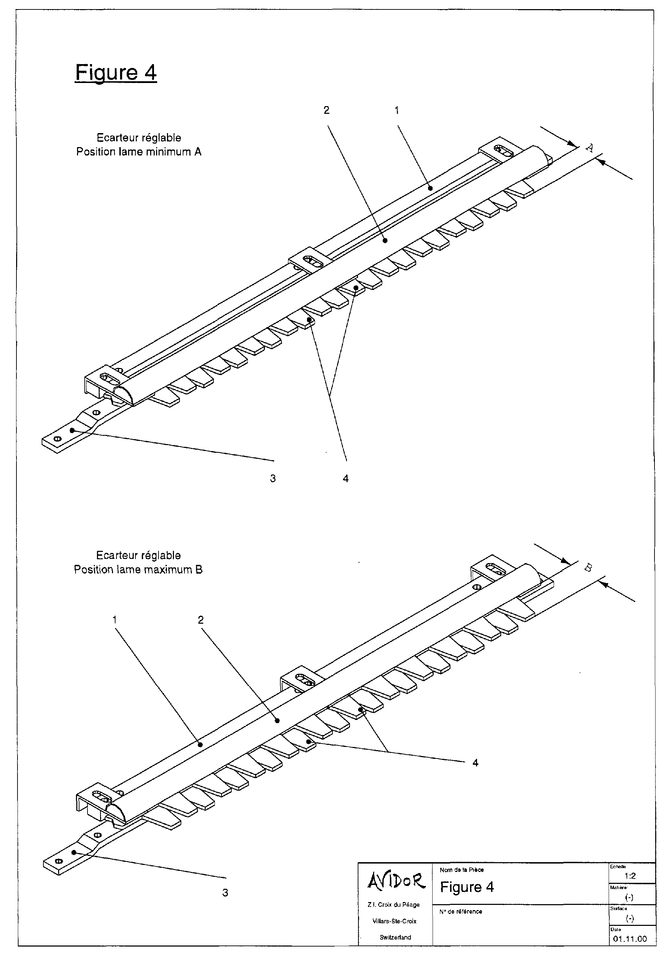

Il est composé des éléments suivants:
- Un support de fixation qui est adapté à la structure des barres de coupe de la tête d'effeuillage (Fig. 2)
- Un écarteur, qui a pour fonction d'éloigner les grappes afin que celles-ci ne soient pas coupées par les barres de coupe (Fig 3). Cet élément est réglable pour s'adapter aux différentes conditions de travail telles que : circonférence du fruit, volume de la végétation, angle d'attaque de la coupe, etc. (Fig. 4).

## Revendications

1. Le protecteur de fruit comprend un support de fixation (1) qui s'adapte sur les machines équipées de système à barres de coupe.

2. Le protecteur de fruit suivant la revendication 1, comprend l'écarteur (2) qui est **caractérisé par** une forme spécifique évitant toute blessure sur les fruits et réglable en fonction du travail que l'on désire effectuer.
